# EUROPEAN PATENT APPLICATION

(11) **EP 2 306 263 A2**
(43) Date of publication of application: **06.04.2011**
(21) Application number: 09173546.4
(22) Date of filing: 20.10.2009
(51) Int. Cl.: G06F 1/16

(54) **Notebook computer docking station**

(30) Priority: 28.09.2009 TW 98132757
(71) Applicant: Giga-Byte Technology Co., Ltd., Taipei 231 (TW)
(72) Inventor: Ma, Mou-Ming, Hsin Tien, Taipei County 231 (TW); Liu, Yi-Yuan, Hsin Tien, Taipei County 231 (TW); Kao, Chien-Chih, Hsin Tien, Taipei County 231 (TW); Huang, Cheng-Hao, Hsin Tien, Taipei County 231 (TW)
(74) Representative: Schwerbrock, Florian

(57) **Abstract**

A notebook computer docking station including a body and a first connecting port is provided. The body has a first recess and a second recess, wherein the first recess is for accommodating a notebook computer and the second recess is for accommodating peripheral devices. The first connecting port is located in the second recess and electrically connected to the peripheral devices.

## Description

### BACKGROUND OF THE INVENTION

### 1. Field of the Invention

The present invention generally relates to a notebook computer docking station, and more particularly, to a notebook computer docking station which is convenient for using.

### 2. Description of Related Art

The modern electronic products always are in pursuit of light-slim-short-small shape design to meet the requirements of the users. In terms of a notebook computer, a plurality of recently-launched subnotebooks are featured by the carry convenience. On the other hand, due to a smaller volume of a subnotebook, the function parts able to be equipped therein are limited as well, so that the functions and the expansivity thereof are accordingly limited, and a subnotebook has much less functions in comparison with a desktop computer with larger operation space. For example, in order to equip an optical disc drive (ODD) with a subnotebook, the ODD must be disposed outside the subnotebook and externally electrically connected to the subnotebook, which is totally unlike a desktop computer where the ODD can be disposed at the host thereof.

To improve the functions and the expansivity of a subnotebook, a docking station is provided in the related art, which has a plurality of connectors so that a user can dispose peripheral devices such as an ODD in the docking station. When a user needs to operate the peripheral devices, the docking station must be joined with the subnotebook, so that the subnotebook is electrically connected to the peripheral devices. In this way, the user not only can enjoy the light and handy feature of a subnotebook, but also can be free from the annoyance of putting in/out for connection or disconnection between the subnotebook and the peripheral devices, and moreover, the user can get the same functions and the expansivity as the ones of a desktop computer.

However, as mentioned above, the peripheral devices can be driven and operated only after electrically connecting the ODD disposed in the docking station to the subnotebook. In particular, although some designs enable the ODD to be detachable from the docking station for the user to easily change the computer type, but the detached ODD then can not be connected to the subnotebook for operation.

### SUMMARY OF THE INVENTION

Accordingly, the present invention is directed to a notebook computer docking station which is convenient for using.

The present invention provides a notebook computer docking station, which includes a body and a first connecting port. The body has a first recess and a second recess, wherein the first recess is for accommodating a notebook computer and the second recess is for accommodating peripheral devices. The first connecting port is located in the second recess and electrically connected to the peripheral devices.

In an embodiment of the notebook computer docking station of the present invention, the above-mentioned second recess has four side walls, and at least one of the side walls is taller than another side wall and functions to guide the peripheral devices and assist in position-limiting the peripheral devices.

In an embodiment of the notebook computer docking station of the present invention, further including a plurality of positioning pillars located in the second recess, and the height of the positioning pillars is greater than the height of the first connecting port.

In an embodiment of the notebook computer docking station of the present invention, further including a plurality of cushions, which are disposed in at least one of the first recess and the second recess. In addition, the notebook computer docking station further includes a second connecting port disposed in the first recess, a plurality of positioning pillars located in the first recess and a plurality of third connecting ports disposed outside the first recess, wherein the height of the positioning pillars is greater than the height of the second connecting port.

In an embodiment of the notebook computer docking station of the present invention, further including an auxiliary base disposed under the body, wherein the length of the auxiliary base is less than the length of the body, but the width of the auxiliary base is greater than the width of the body.

In an embodiment of the notebook computer docking station of the present invention, the above-mentioned body further has a heat-sinking hole, which is correspondingly located under the notebook computer.

The notebook computer of the present invention has a recess for accommodating the notebook computer and another recess for accommodating the peripheral devices, wherein the peripheral device detached from the recess can be individually connected to the notebook computer for use. In comparison with the prior art, the notebook computer docking station of the present invention is advantageous in saving the utilization space and convenient for using.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 is a diagram of a notebook computer docking station provided by an embodiment of the present invention.

Fig. 2 is a diagram of a notebook computer docking station with the peripheral device is detached therefrom.

Fig. 3 is a diagram showing the notebook computer and a peripheral device connected thereto.

Fig. 4A is a top view of a notebook computer docking station.

Fig. 4B is a side view of the notebook computer docking station of Fig. 4A.

Fig. 4C is a right view of the notebook computer docking station of Fig. 4A.

Fig. 4D is a left view of the notebook computer docking station of Fig. 4A.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

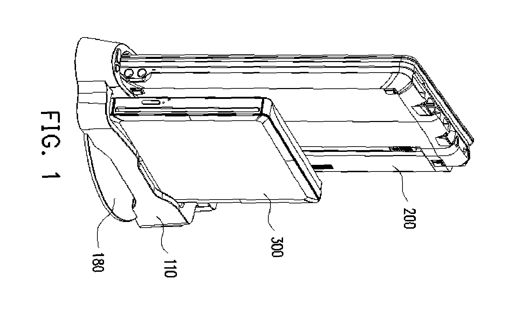

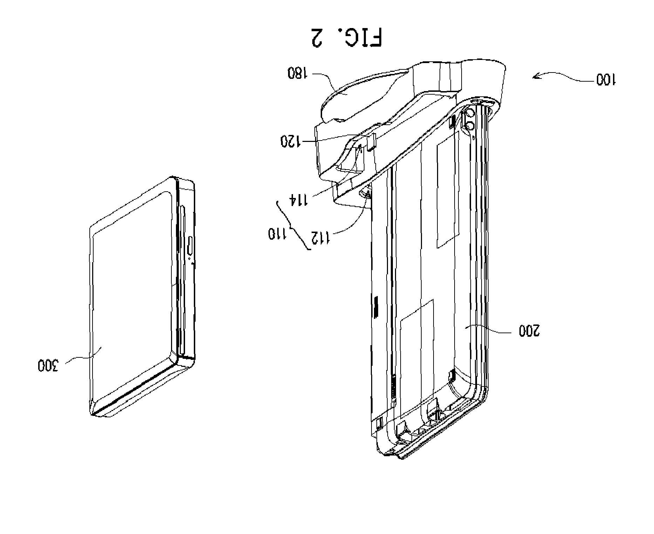

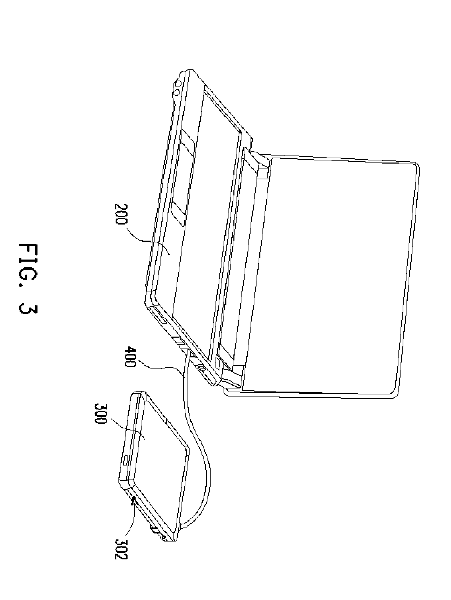

Fig. 1 is a diagram of a notebook computer docking station provided by an embodiment of the present invention and Fig. 2 is a diagram of a notebook computer docking station with the peripheral device is detached therefrom. Referring to Figs. 1 and 2, a notebook computer docking station 100 includes a body 110 and a first connecting port 120. The body 110 has a first recess 112 and a second recess 114, wherein the first recess 112 is for accommodating a notebook computer 200 and the second recess 114 is for accommodating a peripheral device 300, and the peripheral device 300 is for example, an ODD or other peripheral devices such as an external hard disk drive or a mouse. The first connecting port 120 is located in the second recess 114 and electrically connected to the peripheral device 300. The notebook computer 200 and the peripheral device 300 are uprightly and respectively inserted into the first recess 112 and the second recess 114, so that the notebook computer 200 is electrically connected to the peripheral device 300 and expanses functions thereof through the notebook computer docking station 100. The upright layout of the present invention can further save the utilization space in comparison with the conventional docking station where a notebook computer 200 is horizontally disposed on the docking station. Fig. 3 is a diagram showing the notebook computer and a peripheral device connected thereto. Referring to Figs. 2 and 3, the peripheral device 300 is detached from the second recess 114, and the detached peripheral device 300, as shown by Fig. 3, can be connected to the notebook computer 200 via a transmission wire 400 for use. With the above-mentioned configuration, the peripheral device 300 can work as well to expanse functions of the notebook computer 200.

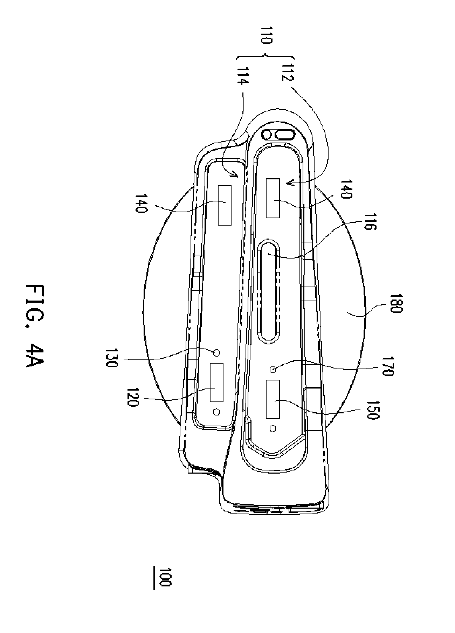

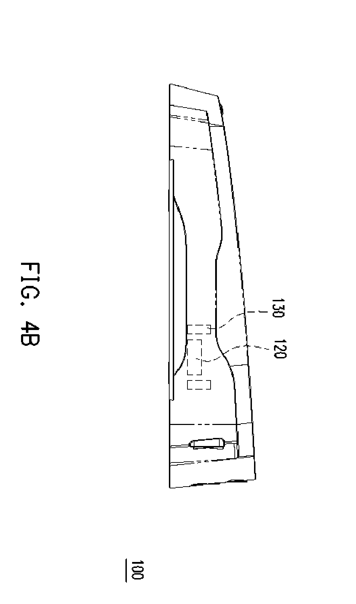

Fig. 4A is a top view of a notebook computer docking station and Fig. 4B is a side view of the notebook computer docking station of Fig. 4A. Referring to Figs. 1, 4A and 4B, the notebook computer docking station 100 of the embodiment further includes a plurality of positioning pillars 130 located in the second recess 114, wherein the height of the positioning pillars 130 is greater than the height of the first connecting port 120, and the peripheral device 300 (as shown in Fig. 3) has a plurality of corresponding positioning holes 302 (as shown in Fig. 3). As the peripheral device 300 (as shown in Fig. 3) is inserted into the second recess 114 of the body 110 of the notebook computer docking station 100, the positioning pillars 130 are aligned with the positioning holes 302 first so as to position the positioning pillars 130 and to hereby electrically connect the connecting port (not shown) of the peripheral device 300 to the first connecting port 120 of the notebook computer docking station 100 correspondingly, which is advantageous in avoiding a direct hit between the first connecting port 120 and the connecting port (not shown) of the peripheral device 300 (as shown in Fig. 3) to cause damage as the peripheral device 300 is inserted into the body 110 of the notebook computer docking station 100. In addition, the peripheral device 300 is uprightly inserted into the second recess 114 of the body 110 of the notebook computer docking station 100, which is advantageous in saving space.

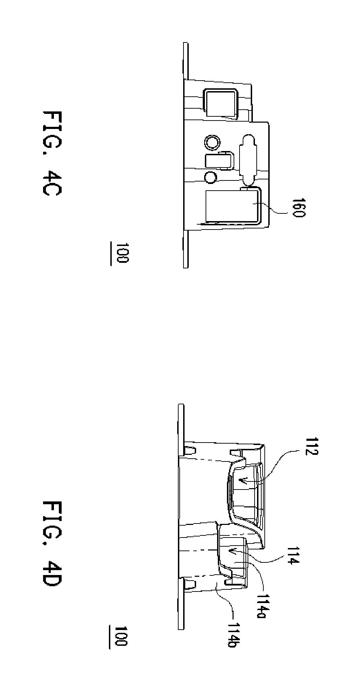

Fig. 4C is a right view of the notebook computer docking station of Fig. 4A. Referring to Figs. 4A, 4B and 4C, the first recess 112 of the notebook computer docking station 100 also disposes a second connecting port 150 and a plurality of positioning pillars 170 therein, and a plurality of third connecting ports 160 are further disposed outside the first recess 112. The first connecting port 120, the second connecting port 150 and the third connecting ports 160 herein can be the same or different from each other; they are, for example, a universal serial bus (USB) interface, an IEEE-1394 interface or a SATA (serial advanced technology attachment) connector depending on the requirement. The notebook computer 200 employs connecting ports (not shown) and positioning holes (not shown) as well, wherein, as the same as the depiction above, the height of the positioning pillars 170 is greater than the height of the second connecting port 150 so that the positioning pillars 170 and the positioning holes (not shown) are inserted by each other for guiding the notebook computer 200 when the user is going to insert the notebook computer 200 into the first recess 112 of the notebook computer docking station 100. With the above-mentioned guiding, the connecting ports (not shown) of the notebook computer 200 and the second connecting port 150 in the first recess 112 are correspondingly inserted by each other. It should be noted that the third connecting ports 160 disposed outside the first recess 112 can be also an interface for network connection socket, a power socket or an audio source socket selected according to the application requirement to facilitate the user to further externally connect the computer to other electronic devices and to expanse functions of the notebook computer 200.

When the notebook computer 200 is inserted into the notebook computer docking station 100, the notebook computer docking station 100 is electrically connected to a power to feed the notebook computer 200 with electricity. In addition, the connecting port of the notebook computer 200 and the connecting port 150 of the body 110 of the notebook computer docking station 100 are inserted by each other and the third connecting ports 160 are disposed on the body 110 of the notebook computer docking station 100, therefore the notebook computer 200 can be electrically connected to other display, keyboard and mouse via the body 110 of the notebook computer docking station 100. With the configuration, the combination of the notebook computer 200 and the notebook computer docking station 100 is equivalent to a traditional desktop computer host; i.e., the user can operate the notebook computer 200 by using the keyboard and the mouse, while the display gives the operation results. In comparison with the desktop computer host, the combination of the notebook computer 200 and the notebook computer docking station 100 provide by the present invention occupies a smaller volume and saves more space in comparison with the desktop computer host.

Besides, the notebook computer docking station 100 further includes a plurality of cushions 140, and the first recess 112 and the second recess 114 respectively employ the cushions 140 therein (as shown in Fig. 4A), wherein the cushions 140 are for buffering the impact between the notebook computer 200, the peripheral device 300 and the body 110.

Referring to Figs. 1, 2 and 4A, the notebook computer docking station 100 further includes an auxiliary base 180 disposed under the body 110, wherein the length of the auxiliary base 180 is less than the length of the body and the width of the auxiliary base 180 is greater than the width of the body. When the notebook computer 200 and the peripheral device 300 are inserted into the notebook computer docking station 100, the auxiliary base 180 can keep the balance of the body 110 so as to prevent the notebook computer docking station 100 from leaning and collapsing.

Referring to Fig. 4A, the body 110 further has a heat-sinking hole 116. When the notebook computer 200 (as shown in Fig. 1) is inserted into the notebook computer docking station 100, the heat-sinking hole 116 is correspondingly located under the notebook computer 200 (as shown in Fig. 1) so as to dissipate heat of the notebook computer 200 (as shown in Fig. 1).

Fig. 4D is a left view of the notebook computer docking station of Fig. 4A. Referring to Fig. 4D, the second recess 114 has a plurality of side walls 114a and 114b, wherein the side wall 114a taller than the side wall 114ab 114a is used to guide and assist in position-limiting the peripheral device 300 (as shown in Fig. 1). In other words, in the embodiment, the second recess 114 has no need to dispose the positioning pillars 130 therein. The side wall 114a and the positioning pillars 130 can together enhance the effects of guiding and position-limiting the peripheral device 300. In the embodiment, the taller side wall 114a and the shorter side wall 114b are joined by each other almost vertically, wherein the side wall (not shown) located between the first recess 112 and the second recess 114 and joined to the side wall 114a is taller than the side wall 114a, i.e., is the tallest side wall. Among the four side walls, the one joined to the tallest side wall and the side wall 114b almost vertically and located between the tallest side wall and the side wall 114b is the shortest side wall. The heights of the four side walls are designed according to the real requirement, which the present invention is not limited to.

In summary, the notebook computer docking station of the present invention enables the notebook computer and the peripheral device to be uprightly inserted into the notebook computer docking station and thereby the combination of the notebook computer and the notebook computer docking station is advantageous in saving utilization space in comparison with the traditional desktop computer host. After the peripheral device is detached from the second recess of the body of the notebook computer docking station, all the above-mentioned parts are easily carried with the mobile user. When the user needs to operate the peripheral device, only a transmission wire is needed to connect the notebook computer to the peripheral device. In this regard, the notebook computer docking station of the present invention expanses functions of the notebook computer.

In addition, the positioning holes disposed in the notebook computer and the peripheral device and the positioning pillars disposed in the recesses of the body of the notebook computer docking station enable the notebook computer and the peripheral device to be aligned with the body of the notebook computer docking station so that the connecting ports of the notebook computer and the peripheral device are easily, correspondingly and electrically connected to the connecting ports of the notebook computer docking station, which can avoid a hit between the connecting ports to cause damage if the notebook computer and the peripheral device have not been aligned with the body of the notebook computer docking station. Moreover, the user can use a keyboard and a mouse externally connected to the notebook computer docking station to operate the notebook computer instead of making the notebook computer serve as an external hard disk drive.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A notebook computer docking station, comprising:
a body, having a first recess and a second recess, wherein the first recess is for accommodating a notebook computer and the second recess is for accommodating peripheral devices; and
a first connecting port, located in the second recess and electrically connected to the peripheral devices.

2. The notebook computer docking station as claimed in claim 1, wherein the second recess has four side walls, and at least one of the side walls is taller than another side wall and functions to guide the peripheral devices and assist in position-limiting the peripheral devices.

3. The notebook computer docking station as claimed in claim 1, further comprising a plurality of positioning pillars located in the second recess, wherein the height of the positioning pillars is greater than the height of the first connecting port.

4. The notebook computer docking station as claimed in claim 1, further comprising a plurality of cushions disposed in at least one of the first recess and the second recess.

5. The notebook computer docking station as claimed in claim 1, further comprising a second connecting port disposed in the first recess.

6. The notebook computer docking station as claimed in claim 5, further comprising a plurality of positioning pillars located in the first recess, wherein the height of the positioning pillars is greater than the height of the second connecting port.

7. The notebook computer docking station as claimed in claim 5, further comprising a plurality of third connecting ports disposed outside the first recess.

8. The notebook computer docking station as claimed in claim 1, further comprising an auxiliary base disposed under the body, wherein the length of the auxiliary base is less than the length of the body, but the width of the auxiliary base is greater than the width of the body.

9. The notebook computer docking station as claimed in claim 1, wherein the body further has a heat-sinking hole correspondingly located under the notebook computer.
